# EUROPEAN PATENT APPLICATION

(11) **EP 2 777 453 A2**
(43) Date of publication of application: **17.09.2014**
(21) Application number: 12806187.6
(22) Date of filing: 31.10.2012
(51) Int. Cl.: A47J 31/44, A47J 31/46

(54) **MACHINE FOR PREPARATION OF BEVERAGES WITH REGULATION OF THE HEIGHT OF BEVERAGE DISCHARGE**

(30) Priority: 31.10.2011 PT 2011105980
(71) Applicant: Novadelta-Comércio e Industria de Cafés, S.A., 1950-709 Lisboa (PT)
(72) Inventor: NABEIRO, Rui Miguel, P-7370-112 Campo Maior (PT)
(74) Representative: Miranda de Sousa, João Paulo Vaz
(86) International application number: PCT/PT2012/000042
(87) International publication number: WO 2013/066199

(57) **Abstract**

The present invention discloses a machine (1) for preparation of beverages, in particular beverages obtained by percolation such as for example espresso coffee, that presents a discharge device (5) with possibility of regulation of the height of beverage discharge, so that it may serve recipients of different dimensions and, in particular, different heights. The discharge device (5).

The discharge device (5) with regulation of the height of exit is characterized by its construction simplicity, operation reliability and different embodiment possibilities.

## Description

### Field of the Invention

The present invention refers to the field of machines for Obtaining beverages in particular beverages obtained by percolation such as for example espresso coffee, in general, and to respective beverage discharge devices with possibility of regulating the beverage discharge in height, in particular.

### Prior Art

In the recent years there has been an increasing use of machines for obtaining beverages by percolation, such as for example espresso coffee. In particular, there has been a growing use of machines for processing individual doses for obtaining different types of beverages, including, for example, espresso coffee and coffee milk, usually consumed in different quantities and, therefore, by means of recipients of substantially different dimensions.

In the case of machines for the production of different types of beverages, and to be poured in recipients of different heights, such as for example cup of coffee, normal cup and tall glass, there is the problem of regulating the height between the exit of beverage from the machine and said recipient. In fact, a reduction of this distance has the advantage of reducing the exposition of the aromatic beverage just being prepared to the atmosphere, with risk of alteration of organoleptic properties. Moreover, there is the advantage of reducing the possibility of undesirable spatters. In this particular, there have been developed two basic types of solutions: by means of displacing the support of recipients in height or by means of displacing the beverage exit point in height.

The solutions known in prior art are liable to a quick wear resulting from a frequent use of mechanisms for displacement in height, in particular when these are articulated in only one place. Moreover, the known solutions do not allow the use of a plurality of beverage discharges in the same support of beverage discharge. In particular, the configuration of the support of beverage discharge in "V" shape allows improved easy of use.

### Summary of the Invention

The goal of the present invention is to provide a machine for preparation of beverages with a discharge device with possibility of regulation of height of the exit of beverage that presents a high simplicity and reliability of use.

This goal is attained by means of a discharge device disposed in articulated connection in at least two stationary locations in the machine for preparation of beverages, in such a way that it may be actuated from a lowered position to an elevated position, and vice-versa, along a reference vertical plane. The articulation mechanism is configured as an articulation of kneecap type, preferentially with support of an element of elastic force, preferentially of the string type. Alternatively, the articulated connection is provided by a swivelling mechanism of the articulated lever type, preferentially with only two lever arms. Alternatively, the articulated connection is carried out by a swivelling mechanism of the semi-spherical cap type.

Another goal of the present invention is to provide a device for regulation of height of the beverage discharge that present as reduced construction complexity as long reliability as possibility, as well as relatively simple production and at competitive costs.

This goal is attained according to the invention by means of a discharge device configured with at least two articulated elements, produced in a single item or in two parts rigidly connected to each other. According to another preferred embodiment, the discharge device presents at least one articulated element, produced preferentially in tubular or semi-open format, so as to receive in its interior a respective fluid connection element that establishes at least part of the fluid connection between the extraction chamber and a respective beverage discharge disposed on the discharge device.

Yet a further goal of the present invention is to provide a height regulation device for the beverage discharge that allows different configurations in view of machines of different types and dimensions.

This goal is attained by means of a configuration of the discharge device with different dimensions, numbers of fluid connection elements and/or beverage discharges.

The invention shall now be explained in greater detail based upon the description of preferred embodiments of the machine for preparing beverages according to the invention, and in the attached Figures.

The Figures show:
- Figures 1a - 1c:: schematic representation in frontal view of three embodiments of a machine (1) for preparing beverages according to the invention, with a discharge device (5) with regulation of height in form of articulated arm;
- Figures 2a - 2b:: schematic representation in side view of a machine (1) for preparing beverages according to the invention, with a discharge beverage (5) in a lowered (A) and elevated (B) position, respectively;
- Figures 3a - 3b:: schematic representation in side view of two preferred embodiments of the articulation mechanisms of the discharge device (5) in a machine (1) for preparation of beverages according to the invention;
- Figures 4a - 4e:: Detail schematic representation, in front view, of different dispositions of a fluid connection element in a discharge device (5) with regulation of height provided in two articulated arms.

### Description of preferred Embodiments of the Invention

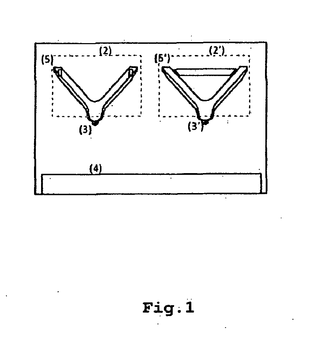

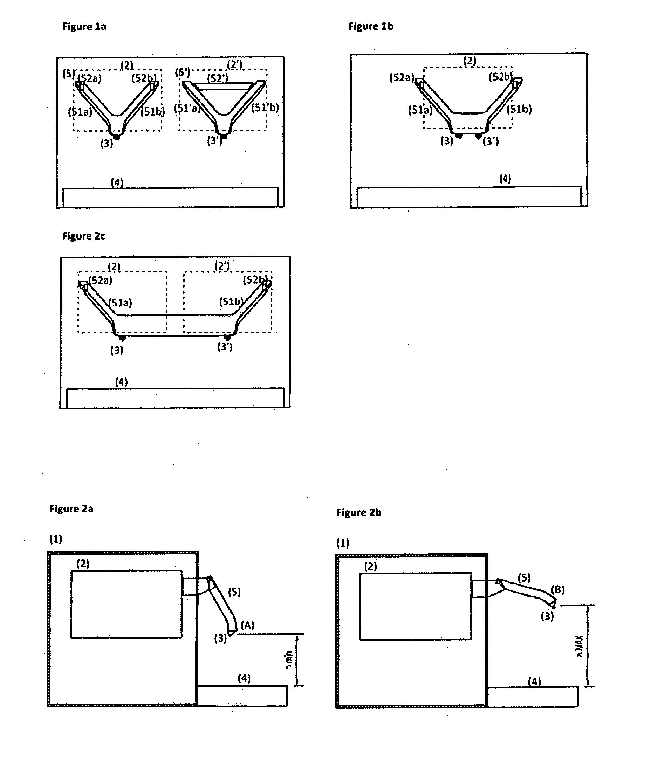

**Figures 1a, 1b** and **1c** represent a machine (1) for preparation of beverages according to the invention. This machine (1) for preparation of beverages presents at least one extraction chamber (2) in its interior (two in the cases represented in Figures 1a and 1c), for percolation of an edible aromatic substance, provided for example inside of an individual doses recipient. Each extraction chamber (2) is in fluid connection with a respective beverage discharge (3) by means of a discharge device (5) with possibility of regulation of height. The latter presents two articulated elements (51a, 51b) that are disposed in articulation in at least two respective stationary points in a part, for example the chassis, of the machine (1) by means of a respective articulation mechanism. The discharge device (5) further presents at least one beverage discharge (3) that is in each case disposed preferentially above a respective support (4) for placing recipients, such as for example cups and glasses.

According to the present invention, this articulation mechanism is configured in such a way that, by means of its actuation, mechanically or manually, it displaces the beverage discharge (3) from a lower position (A) in which it is at a lower height, for example relative to a respective support (4) for recipients, to at least one higher position (B) in which it is retained at a more elevated position above said support (4) for recipients. The movement is carried out in the opposite direction by means of the actuation of the height regulation device with a force applied in the opposite direction.

In Figure 1a it is represented an embodiment of the machine (1) for preparation of beverages according to the invention, whereby to each of the two extraction chambers (2, 2') corresponds a discharge device (5, 5') disposed in articulated manner. According to the invention, the discharge devices (5, 5') are configured in each case with two articulated elements (51a, 51b; 51'a, 51'b) and disposed in an articulation mechanism configured with two articulated connection elements (52a, 52b) in the case of the articulated elements (51a, 51b) represented on the left, and with a single articulated connection element (52') in the case of the articulated elements (51'a, 51'b) represented on the right. In both cases, it is provided one beverage discharge (3, 3') in the lower end of the articulated elements (51a, 51b; 51'a, 51'b).

Figure 1b represents a second embodiment in which a machine (1) for preparation of beverages presents one extraction chamber (2) and a respective discharge device (5) presents two articulated elements (51a, 51b), each of which is supported in two in each case respective articulated connection elements (52a, 52b; 52'a, 52'b). In this case, the discharge device (5) further presents two beverage discharges (3, 3'), whereby one (3) thereof is in fluid connection with the extraction chamber (2) and the other (3') is in connection with a fluid reservoir, for example a water tank disposed in the machine (1) for preparation of beverages. Alternatively, both beverage discharges (3, 3') are in fluid connection with the extraction chamber (2) and the fluid regulation is done by means of a respective hydraulic regulation means, such as for example a valve.

Figure 1c illustrates a third preferred embodiment, whereby a machine (1) for preparation of beverages presents two extraction chambers (2, 2'), each of which is in fluid connection with one in each case respective beverage discharge (3, 3'), whereby both provided in a same articulated element (51a, 51b).

**Figures 2a** and **2b** represent two moments of actuation of a discharge device (5) in a machine (1) for preparation of beverages according to the invention. In a first moment (Figure 2a) the discharge device (5) is in a lower position (A), at a less elevated height (Hₘᵢₙ) above of a support (4) for recipients. This would be the case, for example, of cups of espresso coffee of lower height. In a second moment (Figure 2b) the discharge device (5) has been actuated so that it swivels from the lowered position (A) to a higher position (B), at a more elevated height above of the support (4) for recipients. This would be the case, for example, of glasses for milk coffee. Naturally, the reverse actuation is carried out in analogous manner. The articulated elements (51a, 51b) are moved manually or mechanically.

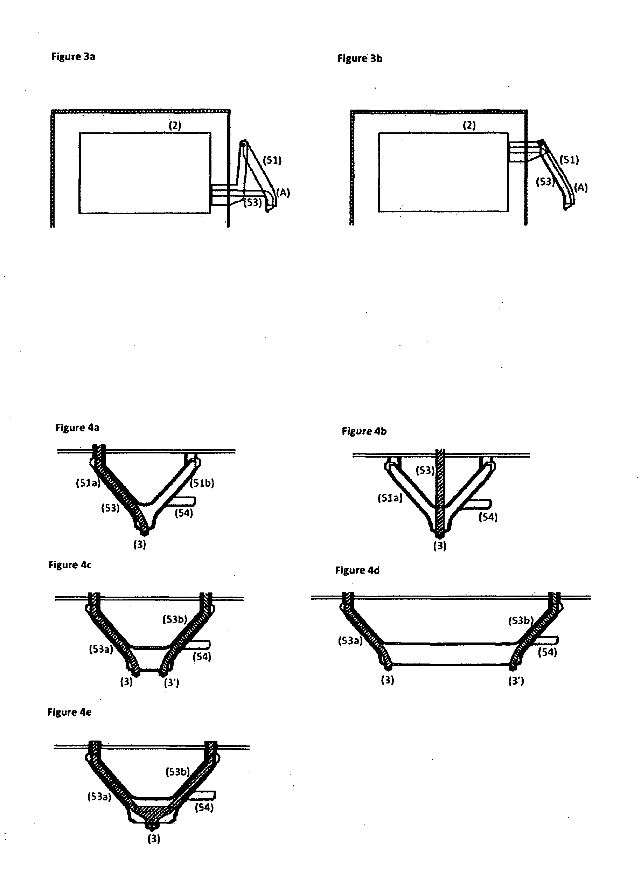

**Figures 3a** and **3b** represent two preferred embodiments of an articulation mechanism of the discharge (5) element by means of a swivelling movement.

Figure 3a shows a discharge (5) element including an articulated element (51) that is fixed to the chassis (2) of the machine (1) for preparation of beverages by means of articulated connection elements (52) configured as a lever type mechanism.

In the case of this embodiment, the exit of the extraction chamber (2) is in fluid connection with the beverage discharge (3) by means of fluid connection element (53). When in a respective lowered position (A), the fluid connection element (53) is disposed, at least approximately, at the height of the beverage discharge (3), preferentially at least slightly above thereof.

Figure 3b illustrates another embodiment of the articulation mechanism of the articulated element (51), in a machine (1) for preparation of beverages according to the invention. In this case, the articulated connection elements (52) are configured as fixed supports, provided with means that retain the articulated element (51) so that it may be swivelled around a respective rotation axis, from a lowered position (A) to an elevated position (B), and back to the initial position.

In the case of both embodiments represented in Figures 3, the articulation mechanism provides a swivelling movement of the discharge element (5), configured as one articulated element (51) or as two (51, 51b), from said lowered position (A) to at least one elevated position (B), and vice-versa, whereby both these positions are disposed along a common reference vertical plane.

**Figures 4a** and **4e** represent preferred embodiments of the fluid Connection elements that connect at least part of the distance between the exit of an extraction chamber (2) and a respective beverage discharge (3) disposed in a discharge device (5).

Figure 4a illustrates, in a top view, a discharge device (5) produced with two articulated elements (51a, 51b) in articulated connection in the box of a machine (1) for preparation of beverages. These are, according to a preferred embodiment of the invention, configured as a body of tubular or semi-open section, so that it may receive a fluid connection element (53) in its interior.

Said fluid connection element (53) is produced in substantially tubular format, preferentially from a synthetic material, preferentially presenting elastic behaviour and thermal resistance, with sufficient characteristics to be used in the food industry ("food grade"). Alternatively, the fluid connection element (53) may be produced as a tube resulting from a set of metallic pieces, articulated with each other in such a way that they allow their extension and deflection. The discharge device (5) in its ensemble advantageously further presents a handle (54) to facilitate its handling in reliable and ergonomic manner.

Figure 4b represents an alternative disposition of the fluid connection element (53) in which this develops substantially along a single reference vertical plane, between the exit of the extraction chamber (2) and the beverage discharge (3).

Figure 4c represents an alternative disposition in which there are provided two fluid connection elements (53a, 53b), for example one in each articulated element (51a, 51b). This disposition presents advantages, for example in case it is intended to carry out the flow of different fluids, simultaneously or sequentially, through an extraction chamber (2), or of other means provided in the machine (1) for preparation of beverages according to the invention.

Figure 4d illustrate another embodiment, in this case with two discharges (3, 3') provided in a discharge device (5), whereby each is provided with a respective fluid connection element (53).

Figure 4e illustrate a variant in which the two fluid connection elements (53a, 53b) are united in the zone of the beverage discharge (3).

Lisbon, October 28th 2011.

## Claims

1. Machine (1) for preparation of beverages by means of percolation of at least one edible aromatic substance, including at least one extraction chamber (2) and at least one, in each case respective, beverage discharge (3) in fluid connection with a respective extraction chamber (2) and disposed upstream thereof in the flow direction, preferentially above a support (4) for recipients, **characterized in that** the, at least one, beverage discharge (3) is disposed in a respective discharge device (5) provided in articulated connection in at least two locations arranged preferentially at a distance apart in a part of the machine (1), whereby by means of applying a certain force (F) said discharge device carries out a swivelling movement in such a way that the beverage discharge (3) is moved from a less elevated position (A), to at least one other, preferentially previously defined, more elevated position (B).

2. Machine for preparation of beverages according to claim 1, **characterized in that** the discharge device (5) presents at least one articulated element (51; 51a, 51b) provided in articulated connection in respective upstream ends, with at least one respective connection element (52; 52a, 52b) disposed in a part, preferentially frontal, of the machine (1) for preparation of beverages.

3. Machine for preparation of beverages according to claims 1 or 2, **characterized in that** the articulated connection is carried out by a swivelling mechanism of the kneecap type, preferentially with support of an element of elastic force, preferentially of the string type.

4. Machine for preparation of beverages according to claims 1 or 2, **characterized in that** the articulated connection is carried out by a swivelling mechanism of the articulated lever type, preferentially with only two lever arms.

5. Machine for preparation of beverages according to claims 1 or 2, **characterized in that** the articulated connection is carried out by a swivelling mechanism of the semi-spherical cap type.

6. Machine for preparation of beverages according to any of claims 1 to 5, **characterized in that** the articulated element (51) presents an arched format, or presents at least two articulated elements (51a, 51b) arranged at an angle.

7. Machine for preparation of beverages according to any of claims 1 to 6, **characterized in that** the articulated elements (51; 51a, 51b) are preferentially configured in form of the "V"-type, or of "U"-type, or similar, provided in rigid connection.

8. Machine for preparation of beverages according to any of claims 1 to 7, **characterized in that** the articulated elements (51; 51a, 51b) are produced as a profile of tubular or semi-open section.

9. Machine for preparation of beverages according to any of claims 1 to 8, **characterized in that** at least part of the fluid connection between an extraction chamber (2) and a respective beverage discharge (3) in the discharge device (5), is provided by means of a fluid connection element (53), preferentially of tubular format.

10. Machine for preparation of beverages according to claim 9, **characterized in that** the fluid connection element (53) is disposed so that is develops at least partially inside of the profile of the articulated element (51; 51a, 51b).

11. Machine for preparation of beverages according to claims 9 or 10, **characterized in that** the fluid connection element (53) is produced preferentially from a flexible material, preferentially from a flexible synthetic material.

12. Machine for preparation of beverages according to claims 9 to 11, **characterized in that** the end of the fluid connection element (53) disposed upstream in the flow direction, is preferentially at a bigger height relative to the beverage discharge (3), at least when the discharge device (5) is in said elevated position (B).

13. Machine for preparation of beverages according to claims 9 to 12, **characterized in that** two fluid connection elements (53a, 53b) are disposed in a respective articulated element (51a, 51b).

14. Machine for preparation of beverages according to claims 9 to 13, **characterized in that** a fluid connection element (53) is disposed in at least approximately centred manner relative to the articulated elements (51; 51a, 51b).

15. Machine for preparation of beverages according to any one of claims 1 a 14, **characterized in that** the articulated elements (51; 51a, 51b) present two beverage discharges (3; 3').

16. Machine for preparation of beverages according to any one of claims 1 to 15, **characterized in that** the discharge device (5) present at least one handle (54) configured and disposed so as to facilitate its manual handling.

17. Machine for preparation of beverages according to any one of claims 1 to 16, **characterized in that** the discharge device (5) is actuated by mechanical means, de preferentially electromechanic means, provided preferentially inside of the machine (1).

18. Machine for preparation of beverages according to any one of claims 1 to 17, **characterized in that** the discharge device (5) is actuated according to at least one parameter relative to the beverage produced, preferentially a parameter communicated by means of an actuation interface of the machine (1) .

19. Machine for preparation of beverages according to any one of claims 1 to 18, **characterized in that** each discharge device (5) may be actuated independently from another discharge device (5') provided in the machine (1) for preparation of beverages.
